# FASCICULE DE BREVET EUROPEEN

(11) **EP 0 389 304 B1**
(45) Date de publication et mention de la délivrance du brevet: **16.06.1993**
(21) Numéro de dépôt: 90400058.5
(22) Date de dépôt: 09.01.1990
(51) Int. Cl.: H02K 1/22, H02K 1/27, H01F 41/02, G01P 3/48

(54) **Anneau magnétique multipolaire**
Magnetischer mehrpoliger Ring
Multipolar magnetic ring

(30) Priorité: 24.01.1989 FR 8900781
(43) Date de publication de la demande: 26.09.1990
(73) Titulaire: S.N.R. ROULEMENTS, 74010 Annecy Cédex (FR)
(72) Inventeur: Alff, Denis, F-74000 Annecy (FR)
(74) Mandataire: Ernst-Schonberg, Michel

(56) Documents cités:
- US-A- 4 002 937
- PATENT ABSTRACTS OF JAPAN vol. 4, no. 95 (P-18)(577) 09 juillet 1980, & JP-A-5557149
- PATENT ABSTRACTS OF JAPAN vol. 4, no. 185 (E-38)(677) 19 décembre 1980, & JP-A-55127871

## Description

L'invention concerne un anneau magnétique multipolaire destiné à être monté sur un organe tournant dans le but de générer un signal magnétique alternatif. On sait que les dispositifs capteurs d'informations incorporés, par exemple dans les roulements, possèdent un élément codeur constitué par un anneau magnétique multipolaire qui se déplace devant un capteur compteur d'impulsion pendant la rotation de l'organe. Un tel codeur est décrit dans la publication FR-A 2 599 794 déposé au nom de la demanderesse. Ce type d'anneau nécessite des moyens de montage et de positionnement additionnels.

La demande de brevet français 88-14111 de la demanderesse décrit une bague ferromagnétique magnétisée qui comporte sur sa circonférence une pluralité de segments à pôles magnétiques dont chacun possède un pôle nord et un pôle sud respectivement situés entre deux pôles de polarités opposées. Une telle bague nécessite l'emploi d'un support ferromagnétique et l'application d'un procédé d'aimantation spécifique avant le montage. Le procédé est d'autant plus délicat à mettre en oeuvre que les segments sont de longueur réduite et que l'on cherche une saturation du matériau magnétique sur l'épaisseur totale de la bague.

La demande de brevet JP-A-55 57 149 décrit également un capteur magnétique selon la partie précaractérisante de la revendication 1

Lorsque l'on cherche à obtenir une grande précision dans la mesure de position ou de déplacement angulaire "haute résolution", l'anneau doit posséder un grand nombre de pôles. Par ailleurs, lorsque la distance entre le codeur et le capteur est importante, le champ magnétique nécessaire au bon fonctionnement du dispositif recquiert, soit des quantités importantes de matière aimantée, soit des matériaux spécifiques tels que des terres rares à champs coercitifs élevés nécessitant une énergie d'aimantation importante difficilement compatible avec l'aimantation multipolaire.

L'invention a pour objet un anneau magnétique multipolaire composite selon la revendication 1 dont la construction ne met en oeuvre aucun procédé d' aimantation spécifique ou complexe, chaque élément constitutif étant magnétisé bipolairement et ceci avant assemblage.

L'invention a encore pour objet un anneau magnétique du type comportant des dents radiales réparties circonférentiellement dont l'écartement prédéterminé est constant dans le but de former des pôles magnétiques.

L'invention a encore pour objet un anneau magnétique multipolaire saturé, de forte puissance.

Conformément à l'invention, l'anneau magnétique multipolaire est constitué par un ensemble de deux anneaux magnétiques élémentaires bipolaires axialement imbriqués dont les pôles magnétiques de l'un sont encastrés entre les pôles magnétiques de polarités inverses de l'autre. L'anneau ainsi réalisé peut comporter un nombre accru de segments aimantés dont la quantité dépend uniquement des conditions mécaniques de réalisation.

D'autres caractéristiques et avantages de l'invention ressortiront de la description qui suit d'un exemple de réalisation de l'anneau en référence au dessin annexé dans lequel :
- La figure 1 est une vue perspective de l'anneau,
- La figure 2 est une représentation des deux éléments de l'anneau en position d'assemblage,
- La figure 3 est une vue en perspective d'un élément de l'anneau.
- La figure 4 est une vue en coupe radiale de l'élément suivant la ligne x-x de la figure 3.

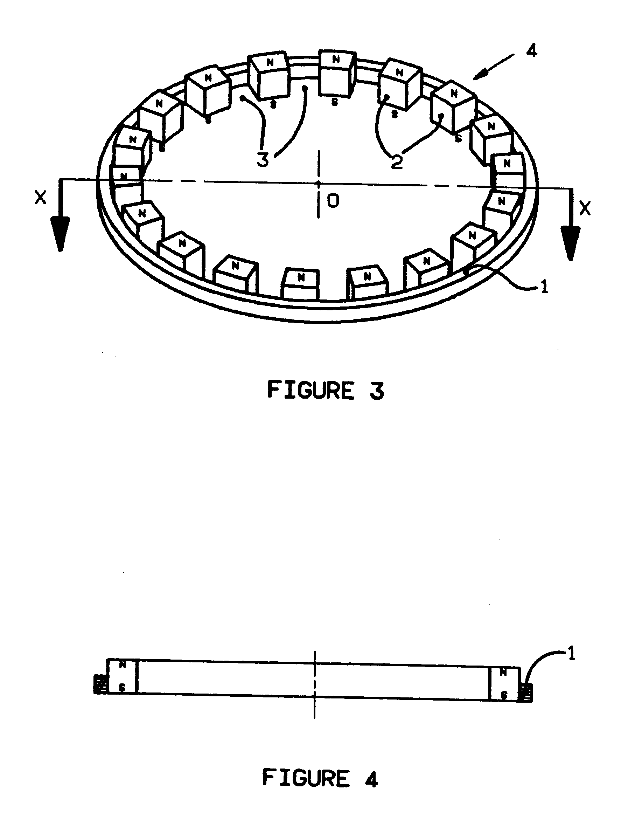

Selon la figure 3, l'anneau bipolaire 4 est constitué par une armature circulaire 1 qui porte intérieurement des dents 2 radiales orientées vers son centre O. Les dents 2 sont régulièrement espacées le long du périmètre intérieur de l'anneau avec un écartement 3 et sont assimilées individuellement à des aimants nord-sud.

A titre d'exemple, l'armature 1 et les dents 2 peuvent être réalisés simultanément par moulage, mais les dents 2 peuvent tout aussi bien être surmoulées sur l'armature 1, celle-ci étant magnétique ou non.

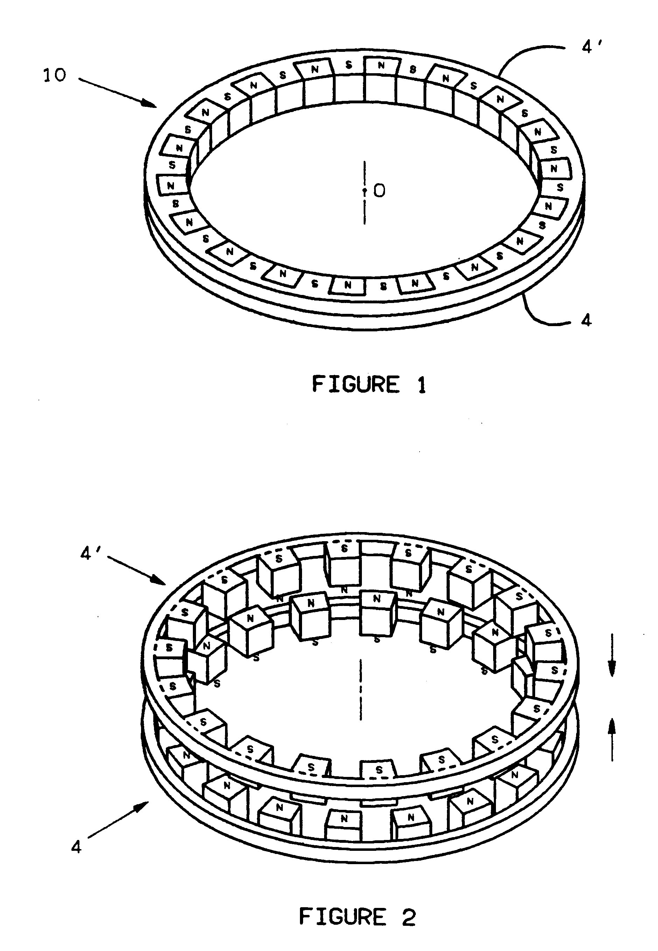

L'anneau 10 composite représenté à la figure 2 est constitué par deux anneaux magnétiques élémentaires 4, 4' bipolaires identiques de même géomètrie et caractéristiques magnétiques axialement imbriqués dans une position telle que représentée à la figure 1 de sorte que les pôles magnétiques de l'un soient encastrés entre les pôles magnétiques de polarités inverses de l'autre.

Sans sortir du cadre de l'invention, il sera évidemment possible de disposer les dents telles que 2 orientées radialement vers l'intérieur et/ou vers l'extérieur de l'armature 1 en fonction de la rigidité souhaitée de l'anneau.

## Revendications

1. Anneau magnétique multipolaire composite constitué par un ensemble de deux anneaux (4, 4') magnétiques élémentaires bipolaires axialement imbriqués dont les pôles magnétiques de l'un sont encastrés entre les pôles magnétiques de polarités inverses de l'autre destiné à être monte sur un organe tournant dont chaque anneau comporte des dents (2) radiales réparties circonférentiellement, dont l'écartement (3) est constant et qui forment des pôles magnétiques identiques, caractérisé par le fait que les deux anneaux élémentaires (4, 4') sont identiques.

2. Anneau magnétique selon la revendication 1, caractérisé par le fait que chaque anneau élémentaire (4 ou 4') est composé d'une armature (1) portant des dents (2) solidaires de celle-ci.

3. Anneau magnétique selon l'une quelconque des revendications 1 ou 2, caractérisé par le fait que les anneaux élémentaires sont au moins en partie moulés.

## Patentansprüche

1. Zusammengesetzter mehrpoliger magnetischer Ring, bestehend aus einem Aufbau zweier bipolarer elementarer magnetischer Ringe (4, 4'), die axial miteinander derart verzahnt sind, daß die magnetischen Pole des einen zwischen die magnetischen Pole entgegengesetzter Vorzeichen des anderen eingesetzt sind und der zur Montage auf einem sich drehenden Teil bestimmt ist, wobei jeder Ring radial am Umfang verteilte Zähne (2) aufweist, deren Abstand (3) konstant ist und die die identischen magnetischen Pole bilden, dadurch gekennzeichnet, daß die beiden elementaren Ringe (4, 4') identisch sind.

2. Magnetischer Ring nach Anspruch 1, dadurch gekennzeichnet, daß jeder elementare Ring (4 oder 4') sich aus einem Ringteil (1) und fest mit ihm verbundenen Zähnen (2) zusammensetzt.

3. Magnetischer Ring nach Ansprüchen 1 oder 2, dadurch gekennzeichnet, daß die elementaren Ringe wenigstens teilweise durch Formguß hergestellt sind.

## Claims

1. A composite multipolar magnetic ring formed by an assembly of two axially overlapping elementary bipolar magnetic rings (4, 4'), one of whose magnetic poles are fitted between the poles of opposite polarity of the other, adapted to be mounted on a rotary member, each ring of which comprises peripherally distributed radial teeth (2), the spacing (3) of which is constant and which form identical magnetic poles, characterized in that the two elementary rings (4, 4') are identical.

2. A magnetic ring as claimed in claim 1, characterized in that each elementary ring (4, 4') is composed of an armature (1) carrying teeth (2) rigid therewith.

3. A magnetic ring as claimed in any one of claims 1 or 2, characterized in that the elementary rings are at least partly moulded.
